# EUROPEAN PATENT SPECIFICATION

(11) **EP 4 266 468 B1**
(45) Date of publication and mention of the grant of the patent: **08.04.2026**
(21) Application number: 22870184.3
(22) Date of filing: 01.09.2022
(51) Int. Cl.: H01M 50/242, H01M 50/211, H01M 10/04, H01M 50/209, H01M 50/291

(54) **BATTERY MODULE AND BATTERY PACK INCLUDING THE SAME**
BATTERIEMODUL UND BATTERIEPACK UMFASSEND DIE BATTERIEMODUL
MODULE DE BATTERIE ET BLOC DE BATTERIE COMPRENANT CELUI-CI

(30) Priority: 17.09.2021 KR 20210124705
(43) Date of publication of application: 25.10.2023
(73) Proprietor: LG Energy Solution, Ltd., Seoul 07335 (KR)
(72) Inventor: LEE, Jung Hoon, Daejeon 34122 (KR); KIM, Dooseung, Daejeon 34122 (KR); YANG, Jaehun, Daejeon 34122 (KR); KIM, Seho, Daejeon 34122 (KR); PARK, Jeong Gi, Daejeon 34122 (KR)
(74) Representative: Plasseraud IP
(86) International application number: PCT/KR2022/013131
(87) International publication number: WO 2023/043099

(56) References cited:
- KR-A- 20140 120 550
- KR-A- 20160 069 807
- KR-A- 20170 013 005
- KR-A- 20200 086 172
- KR-A- 20200 086 172
- KR-A- 20210 112 919
- KR-A- 20210 112 919

## Description

### CROSS-REFERENCE TO RELATED APPLICATION

This application claims priority to and the benefit of Korean Patent Application No. 10-2021-0124705 filed in the Korean Intellectual Property Office on September 17, 2021.

### [Technical Field]

The present invention relates to a battery module, and more specifically, to a battery module housing a battery cell stack in a module housing. In addition, the present invention relates to a battery pack including the above-described battery module.

### [Background Art]

As development of technologies and demands for mobile devices are increased, there is a rapidly increasing demand for rechargeable batteries as energy sources. The rechargeable battery is attracting lots of interest as an energy source for a power device such as an electric bicycle, an electric vehicle, and a hybrid electric vehicle as well as a mobile device such as a mobile phone, a digital camera, a notebook computer, and a wearable device.

One or two or more rechargeable batteries cells are used for one small-scale mobile device, whereas the rechargeable battery is required to be provided with a high-output, high-capacity for a middle-scale or large-scale device such as a vehicle. To this end, a plurality of battery cells may be electrically connected to constitute one module, or may be applied to a product as a pack in which a plurality of modules are electrically connected to each other.

The battery module, for example, may be configured by wrapping and fixing a stack of a plurality of battery cells arranged along one direction with a member constituting the module housing. Here, the members constituting the module housing are required to be provided with a rigid structure so that the shape of the module housing, that is, the battery module, is not deformed by a swelling phenomenon of the battery cell.

An example of a battery module with swelling gauge can be found in Korean Patent Application, publication no. 2020-0086172.

### [Disclosure]

### [Technical Problem]

The problem to be solved by the present invention is to provide a battery module capable of minimizing a displacement deviation of each part of the battery cell due to a swelling phenomenon of the battery cell and a battery pack including the same.

However, the problem to be solved by the embodiments of the present invention is not limited to the above-described problem, and may be variously expanded in the range of the technical ideas included in the present invention.

### [Technical Solution]

A battery module according to an embodiment of the present invention is defined according to claim 1.

The pressure plate may include a pressure body in the second direction and supported on the outermost battery cell, and a fixing part disposed at each end of the pressure body and fixed to each end of the housing plate.

A cross-sectional shape of the recess portion cut in the second direction of the housing plate may be an arc shape.

The spring structure may include a wave-shaped spring in which a plurality of first protrusion parts supported on the housing plate and a plurality of second protrusion parts supported on the pressure plate are continuously connected.

An interval between a plurality of first protrusion parts or between a plurality of second protrusion parts decreases from a center toward a periphery of the wave-shaped spring.

The deformation preventing structure may further include a protruded part supported on the pressure plate and protruded into an outer surface of the housing plate.

The spring structure may include a joint part disposed at the center of the wave-shaped spring and having a receiving part, and the protruded part may include at least one steel ball that is received in the receiving part and is partially protruded through an opening in the housing plate.

The receiving part may include at least one recess facing the recess portion, and the at least one steel ball is inserted into the at least one recess.

The at least one recess may be a plurality of recesses along a height direction of the joint part, and the at least one steel ball may be a plurality of steel balls inserted into the plurality of recesses, respectively.

A battery pack according to another embodiment of the present invention is defined according to claim 10.

### [Advantageous Effects]

According to the embodiment, when the swelling phenomenon occurs from the battery cell stack, the deformation preventing structure may minimize the deformation of the battery cell stack as well as the module housing.

Accordingly, the battery module according to the embodiment may suppress the deterioration of the cycle-life of the battery cell.

The effects of the present invention are not limited to the foregoing effects, and other non-mentioned effects will be clearly understood by those skilled in the art from the description below.

### [Description of the Drawings]

FIG. 1 is a perspective view of a battery module according to an embodiment of the present invention.
FIG. 2 is a combined perspective view of a housing plate and a deformation preventing structure according to an embodiment of the present invention.
FIG. 3 is a rear perspective view of FIG. 2.
FIG. 4 is a top plan view of FIG. 2.
FIG. 5 is an exploded perspective view of FIG. 2.
FIG. 6 is a view to explain that a steel ball of a deformation preventing structure according to an embodiment of the present invention is inserted into a receiving part of a joint part.
FIG. 7 is a view illustrating a process of assembling a deformation preventing structure and a housing plate according to an embodiment of the present invention.
FIG. 8 is a view illustrating a battery pack including a battery module according to an embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

Parts that are irrelevant to the description are omitted in the drawings for clear description of the present invention, and like reference numerals designate like elements throughout the specification.

Further, the size and thickness of the elements shown in the drawings are arbitrarily illustrated for better understanding and ease of description, and the present invention is not necessarily limited thereto. In the drawings, the thickness of layers, films, panels, regions, etc., are exaggerated for clarity. In the drawings, for convenience of description, the thickness of layers, films, panels, areas, etc., are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

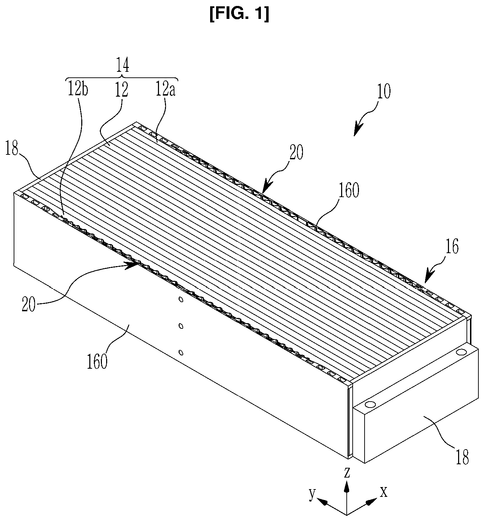

FIG. 1 is a perspective view showing a battery module according to an embodiment of the present invention. As shown in FIG. 1, the battery module 10 according to the embodiment is configured as a stacked battery cell stack 14 in which a plurality of battery cells 12, 12a, and 12b are arranged and stacked in a first direction x are accommodated in a module housing 16.

In the present embodiment, the battery cell 12 may be constructed by housing an electrode assembly in a pouch-type reachable battery, for example, an inner space of a pouch, and by exposing each lead electrically connected to positive electrodes and negative electrodes of the electrode assembly to be disposed in a second direction perpendicular to the first direction x to the outside of the pouch. The pouch may have a shape of a long approximate rectangle along the second direction y. However, in the present invention, the battery cell is not necessarily limited to this configuration.

The module housing 16 may include a pair of housing plates (or base plates) 160 disposed to surround the battery cell stack 14, and a top plate and a bottom plate, which are not shown. This module housing 16 forms an internal space in which the battery cell stack 14 may be accommodated by mutual coupling (e.g. a snap fit or welding) of the housing plate 160, the top plate, and the bottom plate. The housing plate 160, the top plate, and the bottom plate may be provided with a metal material for rigidity of the module housing 16, but the material thereof is not necessarily limited thereto.

At both ends of the module housing 16 in the second direction y, a pair of cover plates 18 coupled to the module housing 16 while shielding a bus bar (not shown) that electrically connects each terminal of a plurality of battery cells 12 to close and seal the interior space may be disposed.

In this battery module 10, the housing plate 160 of the module housing 16 is configured so that the reaction force against the expansion force of the battery cells 12, 12a, and 12b is not deteriorated when the battery module 10 is applied to a product (e.g., an electric vehicle) and swelling occurs from the battery cell stack 14 during the use.

To this end, in the battery module 10 of the present embodiment, the deformation preventing structure 20 is disposed between the housing plate 160 and the outermost battery cells 12a and 12b of the battery cell stack 14. The deformation preventing structure 20 prevents the battery cell stack and/or the module housing from being deformed by the swelling phenomenon. In other words, the deformation preventing structure 20 minimizes the deviation for the reaction force of the housing plate 160 against the battery cell stack 14 when the swelling phenomenon does not occur in the battery cell stack 14, and the reaction force of the housing plate 160 against the battery cell stack 14 when the swelling phenomenon occurs in the battery cell stack 14, thereby the battery cell stack 14 and the housing plate 160 are not deformed, or the battery cell stack 14 or the housing plate 160 is not deformed by the swelling phenomenon.

In the present embodiment, the deformation preventing structure 20 may consist of an assembly coupled to a pair of housing plates 160. Since this assembly has the same structure, in the following description, for convenience, it is described with reference to the housing plate 160 of one side (the housing plate disposed on the left in FIG. 1).

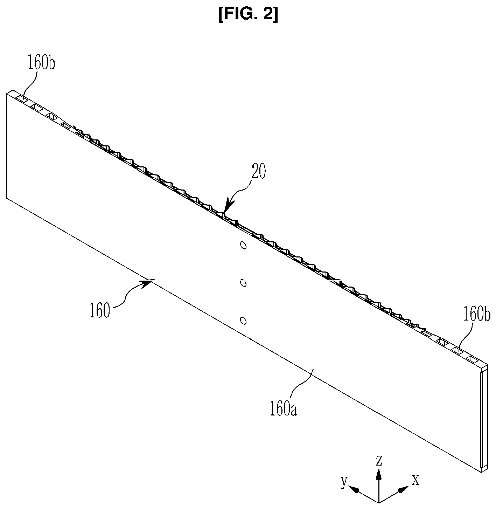

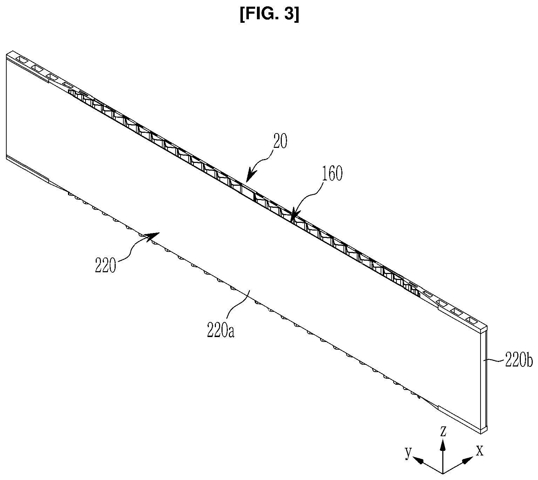

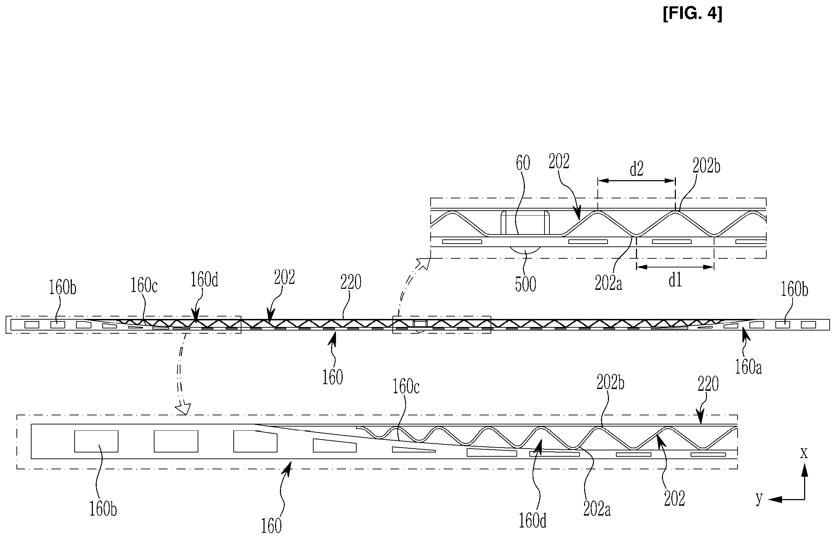

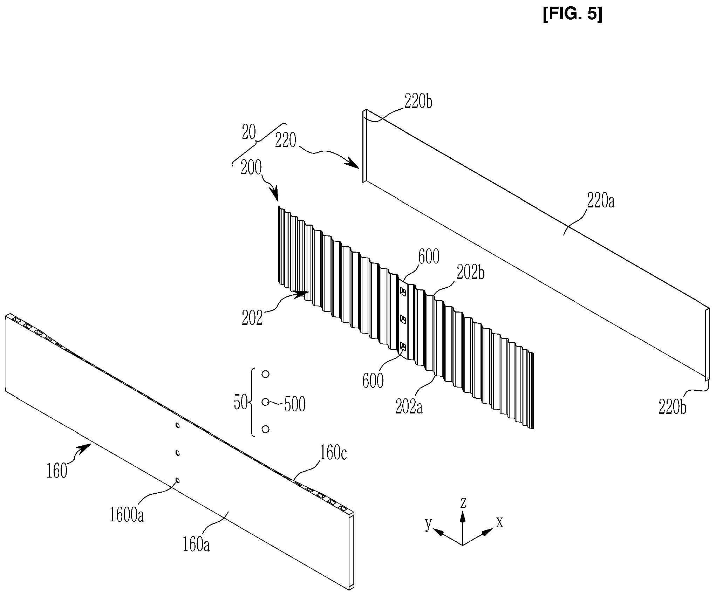

FIG. 2 is a combined perspective view of a housing plate and a deformation preventing structure according to an embodiment of the present invention, FIG. 3 is a rear perspective view of FIG. 2, FIG. 4 is a top plan view of FIG. 2, and FIG. 5 is an exploded perspective view of FIG. 2.

Referring to FIG. 2 to FIG. 5, the housing plate 160 has a long shape disposed along the length direction (or the second direction, y) of the battery module 10 or the battery cell stack 14, and is disposed adjacent to the outermost battery cells 12a and 12b of the battery cell stack 14.

In the present embodiment, the housing plate 160 includes a cover body 160a that is disposed to be elongated along the second direction y. The cover body 160a has a predetermined length and thickness and may be made of a metal material (e.g., aluminum). In the interior of the cover body 160a, a hollow portion 160b having both ends opened for light weight and rigid structure of the housing plate 160 may be provided along a third direction z perpendicular with respect to the first direction x and the second direction y.

One surface of the cover body 160a (a surface facing the battery cell stack) is entirely flat, and a recess portion 160c is positioned on the other surface (a surface facing the battery cell stack) of the cover body 160a.

In the present embodiment, the portion where the recess portion 160c is positioned may be formed in the entire remaining portion of the cover body 160a except for the peripheral portions of both ends of the cover body 160a, and a predetermined area of the recess portion 160c may be appropriately adjusted in consideration of the swelling area of the battery cell stack.

In the present embodiment, the recess portion 160c may have a shape that increases in depth from both peripheral portions to the center of the housing plate 160, for example, a shape in which a cross-sectional shape is formed of an arc shape when the cover body 160a is cut in a direction parallel to the length direction y of the housing plate 160.

Such a housing plate 160 may be manufactured as a rigid structure by extrusion molding.

Meanwhile, the housing plate 160 may have a space part 160d of as much as a concave area due to the recess portion 160c. A spring structure 200 of the deformation preventing structure 20, which will be described later, is accommodated in this space part 160d.

In the present embodiment, the deformation preventing structure 20 includes a pressure plate 220 coupled to a housing plate 160 and supported on the battery cell stack 14. The pressure plate 220 includes a pressure body 220a that is disposed long along the length direction y of the battery cell stack 14, and a fixing part 220b that is disposed at both ends of the pressure body 220a and is coupled to both ends of the housing plate 160. The pressure plate 220 may be made of a metal material (e.g., stainless steel).

The pressure body 220a of the pressure plate 220 may have a long shape along the second direction y, similar to the cover body 160a of the housing plate 160. Both surfaces of the pressure body 220a are substantially flat. The fixing part 220b of the pressure plate 220 is a part that is bent and extended from both ends of the pressure body 220a, and this is fitted to both ends of the cover body 160a of the housing plate 160 so that the housing plate 160 and the pressure plate 220 may be fixedly coupled to each other. Step portions may be provided at both ends of the cover body 160a of the housing plate 160 for stable fixing of the fixing part 220b of the pressure plate 220.

According to the combination of the housing plate 160 and the pressure plate 220, the space part 160d formed by the recess portion 160c may be positioned between the cover body 160a of the housing plate 160 and the pressure body 220a of the pressure plate, while being covered by the pressure body 220a of the pressure plate 220.

The deformation preventing structure 20 includes a spring structure 200 positioned in the space part 160d to apply an elastic force to the pressure plate 220 and the housing plate 160. In the present embodiment, the spring structure 200 may be provided as a wave-shaped spring 202 constituted by a plurality of first protrusion parts 202a and a plurality of second protrusion parts 202b being successively connected. When the wave-shaped spring 202 is accommodated in the space part 160d, a plurality of first protrusion parts 202a may be supported by being in contact with the housing plate 160, and a plurality of second protrusion parts 202b may be supported by being in contact with the pressure plate 220.

The wave-shaped spring 202 may also have a long shape along the second direction y corresponding to the housing plate 160 and the pressure plate 220. In this case, the interval d1 between a plurality of first protrusion parts 202a or the interval d2 between a plurality of second protrusion parts 202b may become narrower from the center to the periphery of the wave-shaped spring 202. For example, in the area from the center to the end of the wave-shaped spring 202, from the center to the approximate 3/5 point, the interval d1 between the protrusion parts 202a or the interval d2 between a plurality of second protrusion parts 202b is formed to maintain the constant interval, and from the approximate 3/5 point to the remaining 2/5 point, the interval d1 between the first protrusion parts 202a or the interval d2 between a plurality of second protrusion parts 202b may gradually narrow. However, the interval between the first protrusion parts 202a and the second protrusion parts 202b is not limited thereto, and may be appropriately adjusted in consideration of the swelling area of the battery cell stack.

In addition, since the wave-shaped spring 202 should be seated in the space part 160d made of the recess portion 160c, the height (example: a straight line distance from the apex of the first protrusion parts to the pressure plate or a straight line distance from the apex of the second protrusion parts to the housing plate) and the angle (example: the angle between the bended parts of the wave-shaped spring constituting the first protrusion parts or the angle between the bend parts of the wave-shaped spring constituting the second protrusion parts) of the parts substantially composing the first protrusion parts 202a or the second protrusion parts 202b disposed to the periphery are formed to be smaller than the height and the angle of the parts substantially composing the first protrusion parts 202a or second protrusion parts 202b disposed to the center. Here, the height and the angle of each part may also be appropriately adjusted in consideration of the swelling part of the battery cell stack.

The wave-shaped spring 202 is a high rigidity spring and may be made of a metal such as stainless steel or a plastic material such as carbon fiber reinforced plastic (CFRP).

The deformation preventing structure 20 may include a further protruded part 50 that is protruded from the outer surface of the housing plate, i.e., the surface of the housing plate 160 opposite to the battery cell stack 14, while being supported by the pressure plate 220. This protruded part 50 serves to suppress the deformation of the housing plate 160 when the battery cell stack 14 is swollen, which will be described later.

In the present embodiment, the protruded part 50 consists of a steel ball (or a ball) 500 with a constant diameter. The steel ball 500 is partially exposed through the opening 1600a passing through the cover body 160a of the housing plate 160 while being inserted into the receiving part 600 provided in the joint part 60 connected to the wave-shaped spring 202. That is, in the present embodiment, the protruded part 50 consists of a part of the steel ball 500 partially exposed from the housing plate 160.

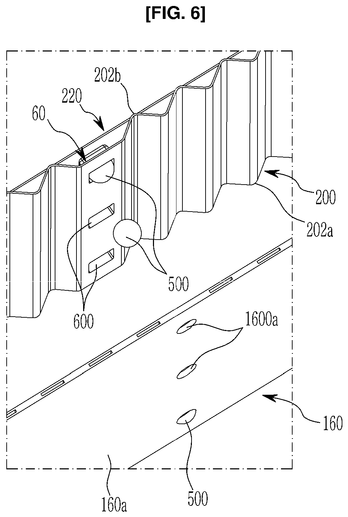

In the present embodiment, the joint part 60 is disposed in the center of the wave-shaped spring 202 and is connected to the second protrusion parts 202b disposed adjacent to both ends thereof. The receiving part 600 of the joint part 60 may be made of a depression disposed to face the recess portion 160c of the housing plate 160. This receiving part 600 is disposed as three, for example, along the length direction z of the joint part 60 in the present embodiment, and the steel ball 500 is inserted into these three receiving parts 600, respectively. Such joint part 60 may be integrally formed with the wave-shaped spring 202 when the wave-shaped spring 202 is manufactured (refer to FIG. 6).

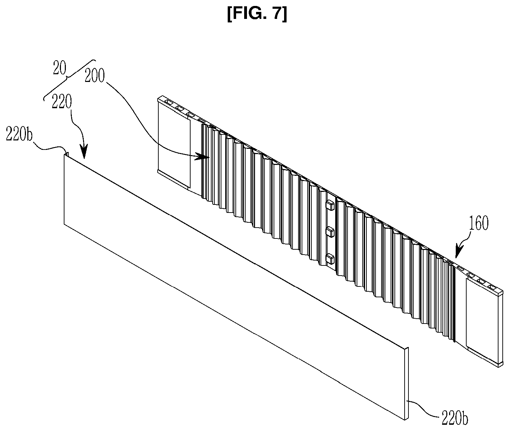

In the deformation preventing structure 20 configured in this way, the spring structure 200 is provided with the state that the steel ball 500 is inserted into the receiving part 600 of the joint part 60 (referring to FIG. 6), the spring structure 200 is accommodated in the recess portion 160c of the housing plate 160 so that a part of the steel ball 500 is exposed to the outside of the housing plate 160 through the opening 1600a (referring to FIG. 7), and as the pressure plate 220 binds and fixes the fixing part 220b to both ends of the housing plate 160 while covering the spring structure 200, it is assembled with the housing plate 160 (referring to FIG. 3).

The housing plate 160 assembled with the deformation preventing structure 20 may be combined with the top plate and the bottom plate to constitute the module housing 16, and as long as the module housing 16 accommodates the battery cell stack 14 in the internal space, it may be combined with the cover plate 18 to form the battery module 10.

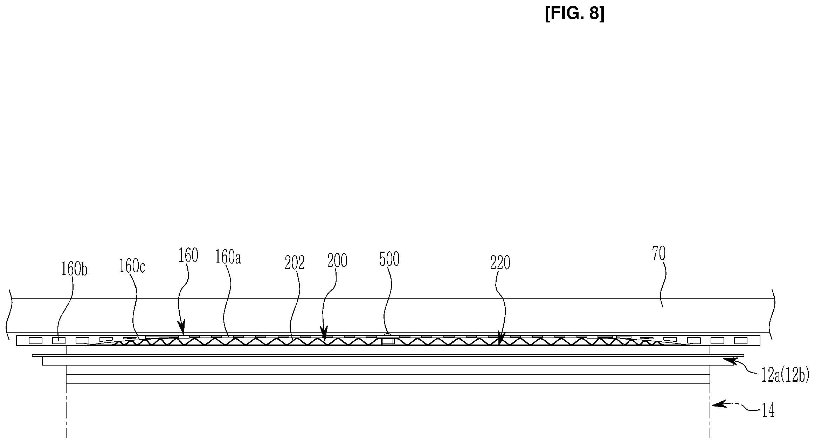

FIG. 8 is a view showing a battery pack including a battery module 10 according to an embodiment. The battery pack may include a beam member (e.g., a vertical beam) 70 constituting a carrier frame, and the battery module 10 may be installed as at least one provided in the carrier frame. When the battery module 10 is installed in the carrier frame, the housing plate 160 may be disposed to the beam member 70 with the interval of several mm.

The battery module 10 according to the present embodiment may be applied and used in devices that require high-capacity power such as electric vehicles, and may minimize the deformation of the battery module 10 even when a swelling phenomenon occurs from the battery cell stack 14.

This is because the wave-shaped spring 202, which is the spring structure 200 of the deformation preventing structure 20, exerts elasticity to counteract between the battery cell stack 14 and the housing plate 160 even if the deformation of the battery cell due to the swelling of the battery cell stack 14 occurs. In the battery cell stack 14, when the battery cell positioned at the periphery of the battery cell stack 14, including the outermost battery cells 12a, and 12b, causes the swelling phenomenon, since the wave-shaped spring 202 is configured to apply more elastic force towards the center rather than the periphery of the swollen battery cell, it is possible to reduce the deviation for the deformation of each part of the battery cell due to the swelling.

Moreover, even if the housing plate 160 is deformed in the first direction x by the swelling, because the steel ball 500, which is the protruded part 50 of the deformation preventing structure 20, is in first contact with the beam member 70 and is supported rather than the housing plate 160, the reaction force of the housing plate 160 against the swelling of the battery cell stack 14 may not deteriorate.

In the present embodiment, the deformation preventing structure 20 has been disclosed as including both the spring structure 200 and the protruded part 50, but it is possible for the deformation preventing structure 20 of the present invention to include only the spring structure 200.

The battery module described above and the battery pack including the same may be applied to various devices. Such a device may be applied to transportation means such as an electric bicycle, electric vehicle, hybrid vehicle, etc., but the present invention is not limited thereto and is applicable to various devices that can use a battery module, to which the scope of the present invention also belongs.

While this invention has been described in connection with what is presently considered to be practical embodiments, it is to be understood that the invention is not limited to the disclosed embodiments. On the contrary, it is intended to cover various modifications included within the scope of the appended claims.

### < Description of symbols>

10: battery module
12: battery cell
12a, 12b: outermost battery cell
14: battery cell stack
16: module housing
20: deformation preventing structure
160: housing plate
160c: recess portion
160d: space part
200: spring structure
220: pressure plate

## Claims

1. A battery module (10) comprising:
a battery cell stack (14) including a plurality of battery cells (12) stacked and arranged in a first direction (x);
a module housing (16) in which the battery cell stack (14) is housed; and
a deformation preventing structure (20) disposed between an outermost battery cell (12a, 12b) of the plurality of battery cells (12) and the module housing (16),
wherein the module housing (16) includes a housing plate (160) including a space part (160d) and disposed adjacent to the outermost battery cell (12a, 12b),
wherein the deformation preventing structure (20) includes:
a pressure plate (220) fixed to the housing plate (160) and supported on the battery cell stack (14); and
a spring structure (200) accommodated in the space part (160d) of the housing plate (160) and disposed between the pressure plate (220) and the housing plate (160), and
**characterized in that** the space part (160d) is a recess portion (160c) provided on one side of the housing plate (160) facing the battery cell stack (14), wherein the housing plate (160) includes a cover body (160a) disposed in a second direction (y) and including the recess portion (160c); and
**in that** the recess portion (160c) is provided on the cover body (160a) with a depth that increases from a periphery to a center of the housing plate (160).

2. The battery module (10) of claim 1, wherein the pressure plate (220) includes a pressure body (220a) disposed in the second direction (y) and supported on the outermost battery cell (12a, 12b), and a fixing part (220b) disposed at each end of the pressure body (220a) and fixed to each end of the housing plate (160).

3. The battery module (10) of claim 1, wherein a cross-sectional shape of the recess portion (160c) cut in a direction parallel to the second direction (y) of the housing plate (160) has an arc shape.

4. The battery module (10) of claim 1, wherein the spring structure (200) incudes a wave-shaped spring (202) in which a plurality of first protrusion parts (202a) supported on the housing plate (160) and a plurality of second protrusion parts (202b) supported on the pressure plate (220) are continuously connected.

5. The battery module (10) of claim 4, wherein an interval between the plurality of first protrusion parts (202a) or between the plurality of second protrusion parts (202b) decreases from a center toward a periphery of the wave-shaped spring (202).

6. The battery module (10) of claim 5, wherein the deformation preventing structure (20) further includes a protruded part (50) supported on the pressure plate (220) and protruded to an outer surface of the housing plate (160).

7. The battery module (10) of claim 6, wherein the spring structure (200) includes a joint part (60) disposed at the center of the wave-shaped spring (202) and having a receiving part (600), and
wherein the protruded part (50) includes at least one steel ball (500) that is received in the receiving part (600) and is partially protruded through an opening (1600a) in the housing plate (160).

8. The battery module (10) of claim 7, wherein the receiving part (600) includes at least one recess facing the recess portion (160c), and the at least one steel ball (500) is inserted into the at least one recess.

9. The battery module (10) of claim 8, wherein the at least one recess is a plurality of recesses along a height direction of the joint part, and the at least one steel ball (500) is a plurality of steel balls (500) inserted into the plurality of recesses, respectively.

10. A battery pack comprising:
a battery module (10) of claim 6; and
a carrier frame (70) in which the battery module (10) is accommodated,
wherein the carrier frame (70) includes a beam member (70) neighboring the housing plate (160), and
wherein a distance between the beam member (70) and the protruded part (50) is less than a distance between the beam member (70) and the housing plate (160).

## Patentansprüche

1. Batteriemodul (10), umfassend:
einen Batteriezellenstapel (14), welcher eine Mehrzahl von Batteriezellen (12) umfasst, welche gestapelt und in einer ersten Richtung (x) angeordnet sind;
ein Modulgehäuse (16), in welchem der Batteriezellenstapel (14) aufgenommen ist;
und
eine Deformation-Verhinderungsstruktur (20), welche zwischen einer äußersten Batteriezelle (12a, 12b) der Mehrzahl von Batteriezellen (12) und dem Modulgehäuse (16) angeordnet ist,
wobei das Modulgehäuse (16) eine Gehäuseplatte (160) umfasst, welche einen Raumteil (160d) umfasst und benachbart zu der äußersten Batteriezelle (12a, 12b) angeordnet ist,
wobei die Deformation-Verhinderungsstruktur (20) umfasst:
eine Druckplatte (220), welche an der Gehäuseplatte (160) fixiert ist und an dem Batteriezellenstapel (14) gehaltert ist; und
eine Federstruktur (200), welche in dem Raumteil (160d) der Gehäuseplatte (160) aufgenommen und zwischen der Druckplatte (220) und der Gehäuseplatte (160) angeordnet ist, und
**dadurch gekennzeichnet, dass** der Raumteil (160d) ein Vertiefungsabschnitt (160c) ist, welcher an einer Seite der Gehäuseplatte (160) bereitgestellt ist, welche dem Batteriezellenstapel (14) zugewandt ist, wobei die Gehäuseplatte (160) einen Abdeckungskörper (160a) umfasst, welcher in einer zweiten Richtung (y) angeordnet ist und den Vertiefungsabschnitt (160c) umfasst; und
dass der Vertiefungsabschnitt (160c) an dem Abdeckungskörper (160a) mit einer Tiefe bereitgestellt ist, welche von einer Umgebung zu einer Mitte der Gehäuseplatte (160) zunimmt.

2. Batteriemodul (10) nach Anspruch 1, wobei die Druckplatte (220) einen Druckkörper (220a), welcher in der zweiten Richtung (y) angeordnet und an der äußersten Batteriezelle (12a, 12b) gehaltert ist, und einen Fixierteil (220b) umfasst, welcher an jedem Ende des Druckkörpers (220a) angeordnet ist und an jedem Ende der Gehäuseplatte (160) fixiert ist.

3. Batteriemodul (10) nach Anspruch 1, wobei eine Querschnittsform des Vertiefungsabschnitts (160c), welche in einer Richtung geschnitten ist, welche parallel zu der zweiten Richtung (y) der Gehäuseplatte (160) ist, eine Bogenform aufweist.

4. Batteriemodul (10) nach Anspruch 1, wobei die Federstruktur (200) eine wellenförmige Feder (202) umfasst, in welcher eine Mehrzahl erster Vorsprungsteile (202a), welche an der Gehäuseplatte (160) gehaltert sind, und eine Mehrzahl zweiter Vorsprungsteile (202b) kontinuierlich verbunden sind, welche an der Druckplatte (220) gehaltert sind.

5. Batteriemodul (10) nach Anspruch 4, wobei ein Intervall zwischen der Mehrzahl erster Vorsprungsteile (202a) oder zwischen der Mehrzahl zweiter Vorsprungsteile (202b) von einer Mitte in Richtung einer Umgebung der wellenförmigen Feder (202) abnimmt.

6. Batteriemodul (10) nach Anspruch 5, wobei die Deformation-Verhinderungsstruktur (20) ferner einen hervorstehenden Teil (50) umfasst, welcher an der Druckplatte (220) gehaltert ist und zu einer äußeren Fläche der Gehäuseplatte (160) hervorsteht.

7. Batteriemodul (10) nach Anspruch 6, wobei die Federstruktur (200) einen Verbindungsteil (60) umfasst, welcher an der Mitte der wellenförmigen Feder (202) angeordnet ist und einen Aufnahmeteil (600) aufweist, und
wobei der hervorstehende Teil (50) wenigstens eine Stahlkugel (500) umfasst, welche in dem Aufnahmeteil (600) aufgenommen ist und teilweise durch eine Öffnung (1600a) in der Gehäuseplatte (160) hervorsteht.

8. Batteriemodul (10) nach Anspruch 7, wobei der Aufnahmeteil (600) wenigstens eine Vertiefung umfasst, welche dem Vertiefungsabschnitt (160c) zugewandt ist, und wobei die wenigstens eine Stahlkugel (500) in die wenigstens eine Vertiefung eingeführt ist.

9. Batteriemodul (10) nach Anspruch 8, wobei die wenigstens eine Vertiefung eine Mehrzahl von Vertiefungen entlang einer Höhenrichtung des Verbindungsteils ist, und wobei die wenigstens eine Stahlkugel (500) eine Mehrzahl von Stahlkugeln (500) ist, welche jeweils in die Mehrzahl von Vertiefungen eingeführt sind.

10. Batteriepack, umfassend:
ein Batteriemodul (10) nach Anspruch 6; und
einen Trägerrahmen (70), in welchem das Batteriemodul (10) aufgenommen ist,
wobei der Trägerrahmen (70) ein Balkenelement (70) umfasst, welches an die Gehäuseplatte (160) angrenzt, und
wobei ein Abstand zwischen dem Balkenelement (70) und dem hervorstehenden Teil (50) weniger als ein Abstand zwischen dem Balkenelement (70) und der Gehäuseplatte (160) beträgt.

## Revendications

1. Module de batterie (10) comprenant :
un empilement de cellules de batterie (14) comportant une pluralité de cellules de batterie (12) empilées et agencées dans une première direction (x) ;
un boîtier de module (16) dans lequel l'empilement de cellules de batterie (14) est logé ; et
une structure de prévention de déformation (20) disposée entre une cellule de batterie (12a, 12b) la plus externe parmi la pluralité de cellules de batterie (12) et le boîtier de module (16),
dans lequel le boîtier de module (16) comporte une plaque de boîtier (160) comportant une partie creuse (160d) et disposée adjacente à la cellule de batterie (12a, 12b) la plus externe,
dans lequel la structure de prévention de déformation (20) comporte :
une plaque de pression (220) fixée à la plaque de boîtier (160) et supportée sur l'empilement de cellules de batterie (14) ; et
une structure à ressort (200) logée dans la partie creuse (160d) de la plaque de boîtier (160) et disposée entre la plaque de pression (220) et la plaque de boîtier (160), et
**caractérisé en ce que** la partie creuse (160d) est une partie évidée (160c) prévue sur un côté de la plaque de boîtier (160) faisant face à l'empilement de cellules de batterie (14), dans lequel la plaque de boîtier (160) comporte un corps de couvercle (160a) disposé dans une deuxième direction (y) et comportant la partie évidée (160c) ; et
**en ce que** la partie évidée (160c) est prévue sur le corps de couvercle (160a) avec une profondeur qui augmente d'une périphérie à un centre de la plaque de boîtier (160).

2. Module de batterie (10) selon la revendication 1, dans lequel la plaque de pression (220) comporte un corps de pression (220a) disposé dans la deuxième direction (y) et supporté sur la cellule de batterie (12a, 12b) la plus externe, et une partie de fixation (220b) disposée à chaque extrémité du corps de pression (220a) et fixée à chaque extrémité de la plaque de boîtier (160).

3. Module de batterie (10) selon la revendication 1, dans lequel une forme en coupe transversale de la partie évidée (160c) découpée dans une direction parallèle à la deuxième direction (y) de la plaque de boîtier (160) présente une forme d'arc.

4. Module de batterie (10) selon la revendication 1, dans lequel la structure à ressort (200) comporte un ressort de forme ondulée (202) dans lequel une pluralité de premières parties en saillie (202a) supportées sur la plaque de boîtier (160) et une pluralité de deuxièmes parties en saillie (202b) supportées sur la plaque de pression (220) sont reliées en continu.

5. Module de batterie (10) selon la revendication 4, dans lequel un intervalle entre la pluralité de premières parties en saillie (202a) ou entre la pluralité de deuxièmes parties en saillie (202b) diminue d'un centre vers une périphérie du ressort de forme ondulée (202).

6. Module de batterie (10) selon la revendication 5, dans lequel la structure de prévention de déformation (20) comporte en outre une partie saillante (50) supportée sur la plaque de pression (220) et faisant saillie vers une surface externe de la plaque de boîtier (160).

7. Module de batterie (10) selon la revendication 6, dans lequel la structure à ressort (200) comporte une partie d'articulation (60) disposée au centre du ressort de forme ondulée (202) et ayant une partie de réception (600), et
dans lequel la partie saillante (50) comporte au moins une bille d'acier (500) qui est reçue dans la partie de réception (600) et fait partiellement saillie à travers une ouverture (1600a) dans la plaque de boîtier (160).

8. Module de batterie (10) selon la revendication 7, dans lequel la partie de réception (600) comporte au moins un évidement faisant face à la partie évidée (160c), et l'au moins une bille d'acier (500) est insérée dans l'au moins un évidement.

9. Module de batterie (10) selon la revendication 8, dans lequel l'au moins un évidement est une pluralité d'évidements le long d'une direction de hauteur de la partie d'articulation, et l'au moins une bille d'acier (500) est une pluralité de billes d'acier (500) insérées dans la pluralité d'évidements, respectivement.

10. Bloc-batterie comprenant :
un module de batterie (10) selon la revendication 6 ; et
un cadre porteur (70) dans lequel le module de batterie (10) est logé,
dans lequel le cadre porteur (70) comporte un élément de type poutre (70) adjacent à la plaque de boîtier (160), et
dans lequel une distance entre l'élément de type poutre (70) et la partie saillante (50) est inférieure à une distance entre l'élément de type poutre (70) et la plaque de boîtier (160).
